(19) **Europäisches Patentamt**

**European Patent Office**

**Office européen des brevets**

(11) Veröffentlichungsnummer: **0 531 758 B1**

(12) ## EUROPÄISCHE PATENTSCHRIFT

(45) Veröffentlichungstag der Patentschrift: **25.10.95**

(21) Anmeldenummer: **92114071.1**

(22) Anmeldetag: **18.08.92**

(51) Int. Cl.⁶: **B01J 8/00**, B01J 8/24

(54) Vorrichtung und Verfahren zum Dosieren von in einem Gas/Fest-Stoff-Strom vorliegenden Feststoff aus einem Wirbelbett.

(30) Priorität: **09.09.91 CH 2641/91**

(43) Veröffentlichungstag der Anmeldung:
**17.03.93 Patentblatt 93/11**

(45) Bekanntmachung des Hinweises auf die
Patenterteilung:
**25.10.95 Patentblatt 95/43**

(84) Benannte Vertragsstaaten:
**AT BE CH DE DK ES FR GB GR IT LI LU NL PT
SE**

(56) Entgegenhaltungen:
**EP-A- 0 308 026**
**US-A- 4 532 108**
**US-A- 4 784 533**

**PATENT ABSTRACTS OF JAPAN vol. 4, no.
80 (M-15)10. Juni 1980**

**PATENT ABSTRACTS OF JAPAN vol. 12, no.
292 (M-729)10. August 1988**

(73) Patentinhaber: **BUEHLER AG**

**CH-9240 Uzwil (CH)**

(72) Erfinder: **Reh, Lothar, Prof. Dr.**
**Unterdorfstrasse 38**
**CH-8126 Zumikon (CH)**
Erfinder: **Tesch, Marc, Dipl.-Ing.**
**Langacherstrasse 1**
**CH-8127 Forch (CH)**
Erfinder: **Haeni, Beat**
**Alpsteinstrasse 16**
**CH-9524 Zuzwil (CH)**
Erfinder: **Ruf, Arthur, Dr.**
**Zimikerried 8**
**CH-8603 Schwerzenbach (CH)**

(74) Vertreter: **Révy von Belvárd, Peter**
**BÜHLER AG,**
**Patentabteilung**
**CH-9240 Uzwil (CH)**

EP 0 531 758 B1

## Beschreibung

Die Erfindung betrifft eine Vorrichtung zum Dosieren von in einem Gas/Feststoff-Strom vorliegenden Feststoff nach dem Oberbegriff des Anspruchs 1, sowie ein Verfahren zum Dosieren eines solchen.

Für unterschiedliche Bereiche der Verfahrenstechnik ist die Genauigkeit des Einstellens von vorgegebenen Feststoffströmen als Masse oder Volumen von grosser Bedeutung, wobei die Anforderungen verschieden hoch sind. Bei der pneumatischen Förderung von Feststoffpartikeln durch Rohrleitungen kommen beispielsweise Dosierschnecken, Zellradschleusen oder Dosierschieber zum Einsatz, bei denen sich allerdings dem ausfliessenden Feststoff-Massenstrom überlagernde periodische Schwankungen als nachteilig erweisen können. Auch bei anderen Vorgängen, wie z.B. dem Einspeisen von fluidisierten, gegebenenfalls erhitzten, Feststoff-Teilchen in einen Reaktionsraum, ist eine kontrollierte Einspeisung vonnöten.

Strömt durch eine Schüttung von Feststoffpartikeln Fluid von unten nach oben, so werden die Partikel ab einer gewissen Fluidgeschwindigkeit, der Lockerungsgeschwindigkeit, mitgenommen; die Schüttschicht wird aufgelockert und durchwirbelt. Ab dem Lockerungspunkt bleibt der Druckabfall der Feststoffpartikel innerhalb der Schicht, der sogenannten Wirbelschicht, im wesentlichen konstant, und zwar unabhängig vom Volumensdurchfluss des Fluids.

Eine derartige Durchmischung erweist sich aus verschiedenen Gründen für unterschiedliche Anwendungsgebiete als vorteilhaft und notwendig. Aufgrund der hohen Werte für Wärme- und Stoffaustauschkoeffizienten und der hohen inneren Wärmeleitfähigkeit einer solchen Wirbelschicht kann fluidisiertes Korn beispielsweise als Wärmeübertragungsmittel verwendet werden. Die von dem Gas getragenen Feststoffpartikel lassen sich ähnlich einer einheitlichen Flüssigkeit durch Rohre leiten, so z.B. in einen Reaktionsraum, in dem die Feststoffpartikel ihre Wärme abgeben. Werden kleinste Feststoffpartikel mit einem Partikeldurchmesser von unter 100$\mu$m verwendet, so laufen z.B. Hochtemperaturreaktionen innerhalb von Bruchteilen von Sekunden ab.

Das Verhalten des aus einer Wirbelschicht bzw. einem Wirbelbett ausfliessenden Gas/Feststoff-Stroms, die Art der möglichen Strömungszustände mit ihrer Neigung zur Destabilisierung und Massnahmen, einer solchen entgegenzuwirken, wurden verschiedentlich sowohl theoretisch als auch empirisch untersucht. Für den Durchgang von fluidisierten Feststoffen aus Wirbelbetten in Reaktionsräume, die im allgemeinen unter einem gewissen Überdruck stehen, werden insbesondere Standrohre (standpipes) eingesetzt, die über Ausflussöffnungen an ihrem unteren Ende - mit insbesondere variablem Querschnitt - die Einspeisung des Feststoffstroms ermöglichen und andererseits als Drucksperre gegen das Reaktionsgefäss wirken. Umfangreiche Untersuchungen (P.J.Jones, L.S.Leung, "Fluidization", Cambridge University Press, 1978; "Fluidization" Academic Press London, 1985; D.P. O'Dea, V.Rudolph, Y.O. Chong, "Powder Technology, 62 (1990) 291) haben sich mit den Bedingungen für das Auftreten verschiedener Strömungszustände in solchen Standrohren beschäftigt. Anhand von Röntgen-Aufnahmen (M.R.Judd, P.D.Dixon, The American Institute of Chemical Engineers, 1978) wurde die Koexistenz von verschiedenen Strömungsformen in einem Standrohr feststellbar, wobei lose gepacktes Schüttbett gerade oberhalb der verengten Ausflussöffnung mit einem Strömungszustand koexistiert, in dem Feststoffpartikel-Strähnen mit hoher Geschwindigkeit abwärts fliessen. Das Strömungsfeld als solches ist somit keineswegs homogen, und die durch das Standrohr fliessenden Feststoffpartikel sind in ihren Eigenschaften nicht mehr mit den fluidisierten Feststoffpartikeln des Wirbelbettes zu vergleichen. Indem knapp oberhalb der Ausflussöffnung des Standrohrs zusätzlich Luft zugeführt wurde, hat man - bis zu einem gewissen Grad erfolgreich - die Verstopfungsgefahr zu beseitigen versucht, eine Massnahme, die vor allem bei industriellen Anlagen Anwendung gefunden hat, und die zu einer stufenweisen - auch plötzlich einsetzenden - Änderung des Strömungszustandes in der Anlage führen kann. Die Stabilität und auch die Uniformität eines in einem Standrohr abwärts fliessenden Gas/Feststoff-Stroms wird damit aber nicht erreicht.

Andere Untersuchungen haben sich mit der Frage nach dem Einfluss von Ausflussöffnungen bzw. Ausflussdüsen aus dem Wirbelbett auf den Strömungszustand des aus einer Wirbelschicht ausfliessenden Gas/Feststoff-Stroms befasst. So soll in der Wirbelschicht bei Annäherung an eine solche Öffnung die Porosität abnehmen, der Strömungszustand des Gas/Feststoff-Stroms vor und nach der Öffnung werden sich unterscheiden. Auch wird ein erhöhter Gasanteil in dem ausfliessenden Gas/Feststoff-Strom festgestellt (R.J. Burkett, P.Chalmers-Dixon, P.J.Morris, D.L.Pyle; Chemical Engineering Science, 1971, Vol. 26, 405). Der Massenstrom der durch eine Öffnung in der Wirbelbettapparatur ausfliessenden Feststoffpartikel hängt ausser von den Partikeleigenschaften im wesentlichen von der Wirbelschichthöhe oberhalb der Öffnung und dem Durchmesser derselben ab und ist bis zu einem bestimmten Öffnungsdurchmesser von der Geschwindigkeit des Fluidisierungsgases unabhängig. Fliesst der Gas/Feststoff-Strom nicht durch einfache Öffnungen der Wirbelbettapparatur, sondern durch Düsen, so hängt der Gasanteil im Gas/Feststoff-Strom vom Verhältnis des Durchmessers der Düse zu deren Länge ab (L.Massimilla; "Fluidization", Academic Press, New York, 1971).

Bei Verbrennungs-, Vergasungs- und chemischen Gas-Feststoffreaktionen feinkörniger Feststoffe wird in vorteilhafter Weise von der Wirbelschichttechnik Gebrauch gemacht, da in dieser durch Temperaturkonstanz optimal einstellbare Reaktionsbedingungen vorherrschen.

Damit dabei eine kontrollierte Zuführung der Feststoffpartikel in die Reaktionsräume gewährleistet werden kann, sind stationäre Dosierung und homogene Mischung Vorbedingungen. Massnahmen, durch die zeitkonstantes Dosieren unter Wahrung der Homogenität des Gas/Feststoff-Stroms möglich werden, sind aus diesem Grund von entscheidender Bedeutung.

In der US 4,784,533 ist eine Zuführung von Feststoffen beschrieben, wobei die Feststoffe mittels eines Wirbelbettes fluidisiert werden und durch einen konischen Bereich über ein Ventil in eine pneumatische Transportleitung geführt werden. Das Ventil regelt die Durchflussmenge, welche über die zuzuführende Luft geregelt wird.

Die EP-A1-84 887 beschreibt einen Durchflussregler für Feststoffe, die aus einer Wirbelbettapparatur über ein Standrohr in einen Feststoffverbraucher fliessen. Dabei wird in einen dem Standrohr zugeordneten Steuertrichter mit einer Plenumkammer Druckmedium eingeleitet; die resultierende Druckdifferenz zwischen Steuertrichter und Feststoffverbraucher bestimmt den Durchsatz an Feststoff. Am unteren Ende des Standrohres bzw. des Steuertrichters bildet sich dabei eine Schüttung von Feststoff. Der in den Feststoffverbraucher eingespeiste Feststoff kann damit weder in bezug auf sein Fliessverhalten noch in bezug auf seine Eigenschaften mit dem in einem aus einer Wirbelschicht ausfliessenden, homogenen Gas/Feststoff-Strom verglichen werden.

Die Aufgabe der Erfindung ist es, eine Vorrichtung und ein Verfahren bereitzustellen, die eine hohe Dosiergenauigkeit auch bei grossen Feststoffmassenströmen bei gleichzeitig kleinen Dosierschwankungen sowohl über längere als auch sehr kurze Zeiträume gewährleisten. Das gelingt in überraschender Weise durch die kennzeichnenden Merkmale der Ansprüche 1 bzw. 8. Damit wird eine gleichmässige, zeitliche und räumliche Verteilung der Feststoffpartikel im austretenden Gas/Feststoff-Strom gewährleistet.

Vorteilhafte Weiterbildungen werden in den kennzeichnenden Merkmalen der abhängigen Ansprüche beschrieben.

Die oben zitierten Untersuchungen, die sich mit Strömungszuständen in Standrohren befasst haben, haben deutlich aufgezeigt, dass die dort auftretenden Inhomogenitäten und Instabilitäten in starkem Masse von der Eintrittssituation und den dort herrschenden Bedingungen beeinflusst werden. Daraus ist auch bekannt geworden, dass über die Höhe der Wirbelschicht und den Querschnitt der Auslassöffnung in der Wirbelbettapparatur eine Beeinflussung des ausfliessenden Massenstroms möglich ist. Konzentrisches Einschnüren des Querschnittes der Auslassöffnung durch mechanische Blenden oder Gummimembranen gewährleistet jedoch keineswegs die Homogenität des ausfliessenden Gas/Feststoff-Stroms. Ausserdem neigen derartige Blenden zur Abrasion und können Verstopfungen oberhalb der Verengung bedingen. Es ist offensichtlich, dass Dosierkonzepte, die auf diesen Prinzipien beruhen, relativ träge sind und keinesfalls den oben genannten Anforderungen an kürzeste Reaktionszeiten entsprechen können. Ebensowenig aber kann mittels einer dieser Massnahmen ein Einfluss auf die Homogenität des ausfliessenden Gas/Feststoff-Stroms genommen werden.

Erfindungsgemäss sind der Auslauföffnung Auslassdüsen Zugeordnet und/oder wenigstens eine Einrichtung zur Beeinflussung der Vorhomogenisierung, d.h. der Gas/Feststoff-Wirbelschicht, vorgesehen.

Wird die Auslassdüse als an die Auslassöffnung anschliessender Hohlkörper ausgebildet, der eine wenigstens teilweise gasdurchlässige Wandung aufweist und wenigstens teilweise koaxial von einem Begasungskanal umgeben ist, so ist auf diese, den Feststoffmassenstrom direkt in der Düse beeinflussbare Weise, sowohl der Durchsatz des Feststoffs als auch die Homogenität des auslaufenden Gas/Feststoff-Stroms einstellbar. Vorzugsweise schliesst sich dieser Hohlkörper senkrecht direkt an die Auslassöffnung an und ist zylindrisch ausgebildet. Die Wandungen des Hohlkörpers können porös sein, vorzugsweise aus Sintermaterial bestehen, und/oder mit Bohrungen versehen sein, um den aus der Wirbelschicht ausströmenden Gas/Feststoff-Strom im Bereich des Hohlkörpers, und damit direkt der Auslassöffnung zugeordnet, radial zusätzlich begasen zu können. Schräg nach unten geneigte Bohrungen, insbesondere in einem Winkel von 5° bis 15°, verhindern einerseits das Eindringen von Feststoffpartikeln in dieselben, gewährleisten andererseits aber trotzdem eine ausreichend radiale Begasung.

Sind auch kleine Querschnittsflächen der Auslassöffnung vorteilhaft für die Homogenität der ausfliessenden Gas/Feststoff-Ströme, so steht diese Tatsache aber im allgemeinen in Widerspruch mit den Forderungen nach der Wirtschaftlichkeit eines Verfahrens. Das erfindungsgemässe Verfahren ermöglicht demgegenüber den Einsatz von wirtschaftlich sinnvollen Auslassguerschnitten, d.h. von hohem Feststoffdurchsatz bei gleichzeitiger Homogenität des Gas/Feststoff-Stroms. Für bestimmte Anwendungsfälle kann eine weitere Erhöhung des Massendurchsatzes durch eine Mehrzahl von Auslassöffnungen im Boden der

EP 0 531 758 B1

Wirbelbettapparatur erreicht werden. Dabei sollte, um nicht die Wirbelschichtstabilität herabzusetzen, die Summe der Querschnittsflächen aller Hohlkörper an den zugeordneten Auslassöffnungen etwa 0.2 bis 2 Prozent der Bodenfläche der Wirbelbettapparatur betragen. Auch sollten aus dem gleichen Grund die mehreren Auslassöffnungen zentralsytnmetrisch und, in Abhängigkeit von ihrem jeweiligen Durchmesser, voneinander beabstandet sein. Dabei bietet sich bei länglichen Wirbelbettformen eine reihenförmige Anordnung an, bei der der gegenseitige Abstand in etwa dem Abstand der Auslassöffnungs-Reihe zu einer Seitenwand der Wirbelbettapparatur entsprechen sollte. Ist die Bodenfläche der Wirbelbettapparatur eher kreisförmig bzw. quadratisch ausgebildet, so ist es aus Stabilitätsgründen empfehlenswert, die mehreren Auslassöffnungen vorzugsweise in etwa im Zentrum anzuordnen, wobei der gegenseitige Abstand der Auslassöffnungen wenigstens dem Durchmesser jeder Auslassöffnung entsprechen sollte.

Um den Einfluss der Eintrittszone in die Auslassöffnung auf die Stabilität der Wirbelschicht möglichst klein halten zu können, sollte die Höhe der Wirbelschicht wenigstens gleich dem dreifachen Durchmesser der Auslassöffnung, vorzugsweise aber zehn- bis fünfzigmal so gross sein. Eine grössere Wirbelschichthöhe - ebenso wie ein grösserer Wirbelschichtdurchmesser - dient überdies als Regulativ für eventuell mögliche Schwankungen, mit denen bei der Einspeisung von Feststoffpartikeln in die Wirbelschicht immer zu rechnen ist.

Es versteht sich, dass diese Massnahmen jede für sich allein, aber insbesondere in Kombination, eine vorteilhafte Pufferwirkung der Wirbelschicht gegenüber Dosierschwankungen des in die Wirbelbettapparatur eingespeisten Feststoffs ergeben.

Die Höhe der Wirbelschicht kann über Druckdifferenzmessung eingestellt bzw. nachkorrigiert werden. Alternativ kann auch ein Niveau-Fühler vorgesehen werden. Es kann somit über die Einstellung des Vordrucks oberhalb der Wirbelschicht eine Grobregelung stattfinden, beispielsweise bei grossen Abweichungen des in der Auslaufleitung gemessenen Feststoffmassenstroms. Dies ist ausserdem mittels Regelung der in die Wirbelbettapparatur eingespeisten Menge an Feststoffpartikeln und/oder über eine Regelung des über der Wirbelschicht herrschenden Drucks möglich.

Die dadurch mögliche Kombination von zwei Massnahmen zur verschieden schnellen Regelung des Feststoffmassendurchsatzes, nämlich einmal über die zusätzliche Begasung im Bereich des Hohlkörpers direkt im Bereich der Auslassöffnung (äusserst schnell), und einmal über die Niveauregelung der Wirbelschicht bzw. des über dieser liegenden Gasdruckes (träge), erweitert den Regelbereich und ergibt eine verbesserte Regelcharakteristik.

Wird (werden) der Auslassöffnung wenigstens eine, vorzugsweise aber aus Symmetriegründen wenigstens zwei, Fluidisierungsdüse(n) zugeordnet, die unmittelbar neben der Auslassöffnung in die Wirbelbettapparatur mündet (münden), so bewirkt diese separate Belüftung an der Auslassöffnung das Lösen von Schüttgutbrücken beim Anfahren und verhindert Blaseneinzug in die Auslassöffnung während des Betriebes, wobei dazu die Belüftung möglichst gering sein sollte. Wird eine solche Fluidisierungsdüse in Form eines Ringkanals rund um die Auslassöffnung ausgebildet, so ist damit eine besonders gleichmässige Belüftung des Bereichs rund um diese gegeben, insbesondere dann, wenn diese Fluidisierungsdüse wenigstens teilweise aus porösem Material besteht, durch das die Fluidisierung geschieht. Die Beeinflussung des ausfliessenden Feststoffmassenstroms über derartige Fluidisierungsdüsen ist dadurch zwar nicht erheblich, die Homogenität der Wirbelschicht im Eintrittsbereich in die Auslassöffnung wird jedoch verbessert.

Verfahrensmässig gesehen, sollte die in die Wirbelbettapparatur einströmende, die Feststoffpartikel fluidisierende Gasmenge so gesteuert werden, dass bei niedrig expandierter Wirbelschicht, vorzugsweise in der Nähe des Lockerungspunktes, insbesondere im Bereich des 0.95- bis 2-fachen der Lockerungsgeschwindigkeit, gearbeitet wird. Auf diese Weise wird die Gefahr von Blasen- oder Kanalbildung und damit die Neigung zur Instabilität der Wirbelschicht weitgehend ausgeschlossen.

Der mittlere Korndurchmesser der Feststoffpartikel sollte zur Gewährleistung schneller Reaktionszeiten, vor allem bei Hochtemperaturreaktionen, nicht grösser als $200\mu m$, besser jedoch nicht grösser als $100\mu m$, sein und im wesentlichen für alle Feststoffpartikel gleich sein, d.h. eine enge Korndurchmesserverteilung aufweisen.

Besteht der Boden der Wirbelbettapparatur aus hochporösem Material, so können sich beim Durchgang des Fluidisierungsgases nur kleinste Blasen oberhalb des Bodens der Wirbelbettapparatur bilden, das Gas strömt gut vergleichmässigt in die Wirbelschicht ein, wodurch mögliche Instabilitätskerne vermieden werden können. Eine weitere Massnahme zur Erhöhung der Homogenisierung besteht darin, dass der Boden der Wirbelbettapparatur schwingungsfähig ausgebildet ist, so dass er in Schwingungen versetzt werden kann. Alternativ bzw. zusätzlich kann auch das durchströmende Gas selbst durch eine Pulsiereinrichtung in Schwingungen versetzt werden.

4

Aus den für eine solche erfindungsgemässe Vorrichtung ins Auge gefassten Anwendungsgebieten, beispielsweise in der Petroindustrie, bei Calcinierungs-, Vergasungs- und Pyrolyseprozessen bzw. katalytischen Crackingprozessen, ergibt sich die Forderung nach druckfester Ausführung von Wirbelbettapparatur und Auslassdüsen, bei Verwendung für Kohlevergasung vorzugsweise bis 80 bar, wobei für den Einsatz bei höheren Temperaturen - so sind beispielsweise in der Calcinierungsindustrie Temperaturen über 1000°C möglich - insbesondere keramisches Material (für den Hohlkörper entsprechend Sinterkeramik), gegebenenfalls auch nur als Auskleidungsmaterial, verwendet werden sollte.

Um den Durchsatz von Feststoff in der Auslassleitung zu bestimmen und dabei gleichzeitig geringe Reaktionszeiten für die Korrektur von Schwankungen zu erhalten, wird eine solche Messeinrichtung möglichst im Bereich der Auslassöffnung angeordnet werden.

Die Bestimmung des im Luftstrom geförderten Feststoffmassenstroms wurde anhand von Druckdifferenzmessung mittels einer konvergent-divergenten Mess-Düse für kleine Feststoffkonzentrationen bei vernachlässigbaren Konzentrationsschwankungen untersucht (W.Barth, R.Nagel, K.van Waveren; Chemie-Ing. - Techn.; 29(1957), 599). Dieses Messverfahren hat den Nachteil, dass bei kleinen Geschwindigkeiten und hohen Gutbeladungen Entmischung möglich ist. Der Feststoffmassenstrom wird über zwei Druckdifferenzmessungen bestimmt, was den messtechnischen Aufwand vergrössert. Auch muss ein gewisser Druckverlust in Kauf genommen werden.

Andererseits zeichnen sich Differenzdruckverfahren durch eine sehr hohe Empfindlichkeit aus und kommen deshalb erfindungsgemäss zur Anwendung.

Wird das Prinzip der Differenzdruckmessung mittels direkt dem Hohlkörper zugeordneten und knapp oberhalb des Bodens der Wirbelbettapparatur angeordneten Druckmessstellen verwirklicht, so reicht überraschenderweise diese eine Messung aus, um den Feststoffmassenstrom zu erhalten. Ausserdem besitzen Drucksensoren sehr kurze Ansprechzeiten, wodurch sich die Messzeiten signifikant verkürzen. Vorzugsweise werden dafür piezoresistive Druckaufnehmer eingesetzt. Aufgrund der kleinen Feststoffgeschwindigkeit am Eingang des Wirbelschichtauslaufes ist die Gefahr einer Erosion herabgesetzt. Dazu besitzt diese Messmethode den Vorteil, dass kein Druckverlust in Kauf genommen werden muss. Wird die dem Hohlkörper zugeordnete Druckmessung knapp unterhalb des Düseneintritts und knapp oberhalb der gasdurchlässigen Wandung bzw. der Bohrung(en) in der Wandung des Hohlkörpers positioniert, so reduzieren sich die Totzeiten zwischen Eintritt des Feststoffs in die Auslassöffnung und in den Hohlkörper, Messung des Feststoffmassenstroms und Beeinflussung des Feststoffmassenstroms über eine Begasung zu wenigen Millisekunden. Bisher unmögliche Steuerzeiten von Sekundenbruchteilen werden damit problemlos möglich.

Auf diese Weise kann der Feststoffmassendurchsatz bestimmt werden. Zusätzlich kann aber zur Erhöhung der Messgeschwindigkeit eine weitere Druckmessstelle mit einem Drucksensor im Bereich des Hohlkörpers vorgesehen werden, wodurch die Möglichkeit der Bestimmung von Feststoffmassenstromschwankungen gegeben ist.

Der auslaufende Feststoffmassenstrom kann gegebenenfalls auch geregelt werden, wenn in der Auslaufleitung, möglichst unmittelbar an den Hohlkörper anschliessend, eine Messeinrichtung zur Bestimmung des Feststoffmassenstroms vorgesehen wird, die über eine Steuereinrichtung die Begasung des Gas/Feststoff-Stroms über den Hohlkörper steuert. Für bestimmte Anwendungen wird einer solchen Regelung der Vorzug gegeben werden, wenn auch das Dosieraggregat als solches komplexer wird.

Erfindungsgemäss beziehen sich die Massnahmen zur Einstellung eines zeitkonstanten auslaufenden Feststoffmassenstroms und zur Einstellung der Homogenität des Gas/Feststoff-Stroms insbesondere auf den unmittelbaren Bereich der Auslassöffnung, sei es innerhalb der Wirbelschicht oder sei es in dem unmittelbar an die Auslassöffnung anschliessenden Hohlkörper. Die so erreichte Stabilität und Uniformität des auslaufenden Gas/Feststoff-Stroms bleibt erhalten, wenn dieser, im wesentlichen unmittelbar nach dem Durchströmen des Hohlkörpers, von Gas ummantelt wird. Dies geschieht vorzugsweise mittels einer - insbesondere ringförmigen - Düse, die Gas koaxial und in Strömungsrichtung dem Gas/Feststoff-Strom zuführt, wobei die Gasgeschwindigkeit möglichst gleich der Strömungsgeschwindigkeit des Gas/Feststoff-Stroms sein sollte.

Die Erfindung wird im folgenden anhand von Zeichnungen beispielhaft beschrieben. Es zeigen:

Fig.1      eine Prinzipskizze einer Anordnung mit einer Wirbelbettapparatur und einer erfindungsgemässen Dosiervorrichtung;

Fig.2      einen Schnitt durch eine Wirbelbettapparatur mit Auslassöffnung;

Fig.3a      und 3b verschiedene Ausführungsformen für erfindungsgemässe Hohlkörper, in jeweils zwei Teilschnitten;

Fig.4      eine Darstellung der Abhängigkeit des Feststoffmassenstroms von der zusätzlichen Begasung;

Fig.5      Dosierschwankungen beim Austreten eines Gas/Feststoffstrahls aus einer Wirbelschicht und

Fig.6    eine Anordnung zum Beschicken mehrerer Reaktionsräume.

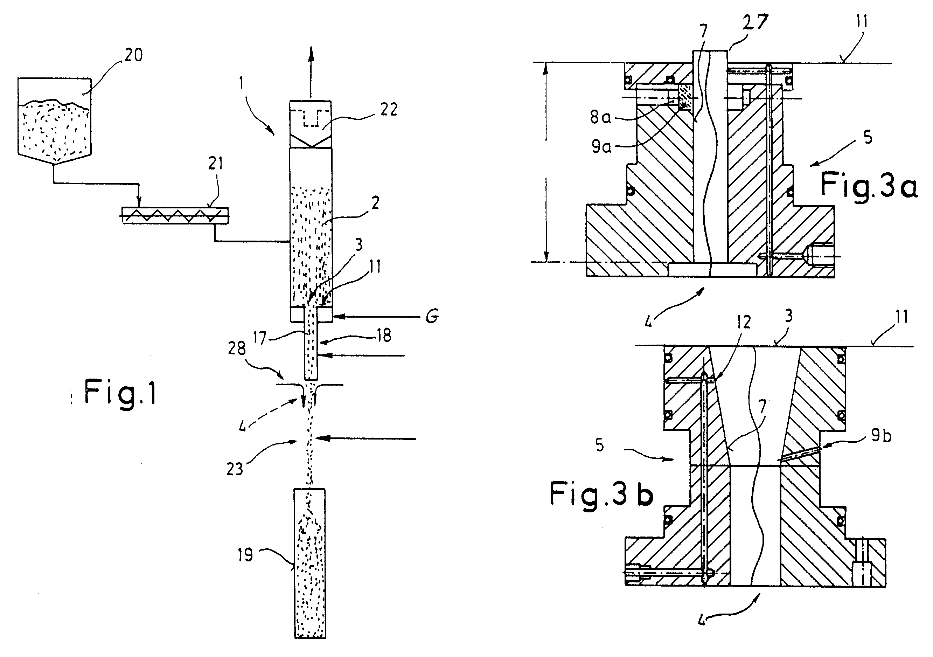

Aus Fig.1 ist in schematischer Darstellungsweise das erfindungsgemässe Prinzip zu erkennen, nach dem ein aus einer Wirbelbettapparatur 1 ausfliessender Gas/Feststoff-Strom 17 über eine Dosiereinrichtung 18 in einen Reaktionsraum 19 eingebracht wird. Der Feststoff wird in Form von Partikeln, deren Durchmesser im Hinblick auf die im Reaktionsraum 19 erwünschten Reaktionen und insbesondere Reaktionszeiten im allgemeinen kleiner als 100μm gewählt wird, aus einem Vorratsbehälter 20 über eine Dosierschnecke 21 in die Wirbelbettapparatur 1 eingespeist. Eine im Auslaufbereich des Vorratsbehälters 20 vorgesehene Auflockerungseinrichtung (nicht dargestellt) gewährleistet gleichmässigen Ausfluss der Feststoffpartikel, auch bei unterschiedlichen Füllhöhen im Vorratsbehälter 20. Zur möglichst schonenden Förderung der Partikel ist die Dosierschnecke 21 als Hohlspirale ausgebildet. Die Drehzahl der Dosierschnecke 21 und der Ort der Einspeisung der Feststoffpartikel ist so vorgewählt, dass der Impuls der aus der Dosierschnecke 21 in die Wirbelschicht 2 eingespeisten Feststoffpartikel vernachlässigt werden kann.

Durch den Boden 11 der Wirbelbettapparatur 1 strömt Fluidisierungsgas G von unten nach oben und wirbelt die eingespeisten Feststoffpartikel unter Bildung einer Wirbelschicht 2 auf. Mit steigender Anströmgeschwindigkeit des Gases lockert sich die Schicht mehr und mehr auf, so dass die Feststoffpartikel in diesem Zweiphasensystem kleinere und grössere Ortswechsel vornehmen können. Ab einer bestimmten Anströmungsgeschwindigkeit, bei der eine Schüttschicht in eine Wirbelschicht übergeht (Lockerungspunkt), ist der Druckabfall in der Schicht annähernd konstant.

Theoretisch erstreckt sich der Wirbelschichtbereich von der unteren Grenzgeschwindigkeit, der Lockerungsgeschwindigkeit, bis zu einer oberen Grenzgeschwindigkeit, die dadurch charakterisiert werden kann, dass die Schicht so sehr aufgelockert ist, dass jedes einzelne Partikel unbeeinflusst von einem benachbarten im Fluid-Strom schwebt. Dieser Wirbelschichtbereich lässt sich in zwei Bereiche, einen homogenen und einen inhomogenen Bereich, unterteilen. Der homogenen Wirbelschicht entsprechen kleine Anströmgeschwindigkeiten des fluidisierenden Gases, der inhomogenen Wirbelschicht entsprechend grosse Anströmgeschwindigkeiten. Dabei ist für homogene Wirbelschichten der Lückengrad zeitlich und räumlich konstant, im Gegensatz zur inhomogenen Wirbelschicht, in der dieser starken örtlichen und zeitlichen Schwankungen unterliegt und sich Blasen oder auch Kanäle zwischen Partikelagglomerationen bilden. Streng genommen bilden sich homogene Wirbelschichten nur bei Fluidisierung mit Flüssigkeit aus; wird mit Gas fluidisiert, so bilden sich immer Blasen, die gegen die obere Wirbelschicht-Begrenzung zu grösser werden. Im Bereich der Auslassöffnung jedoch, wie in dem erfindungsgemässen Beispiel, bei dem Gas zur Fluidisierung verwendet wird, kann insbesondere infolge der erfindungsgemässen Massnahmen mit genügender Homogenität gerechnet werden.

Soll nun aus einer solchen Wirbelschicht 2 fluidisierter Feststoff zeitkonstant dosiert abgefördert werden, so kann dies sinnvollerweise nur aus einem homogenen Wirbelschichtbereich heraus geschehen. Denn nur dann sind die Feststoffpartikel gleichmässig in dem abzuziehenden Wirbelschichtvolumen verteilt; es treten im Idealfall keine Bindekräfte zwischen den Partikeln auf. Vorteilhaft sind Kugelform der Partikel einerseits und einheitliche Grösse andererseits. Bei sehr unterschiedlichen Korngrössen kann eine Entmischung stattfinden, wobei sich die kleinsten Partikel in der Nähe der freien Oberfläche der Wirbelschicht 2 ansammeln und bei Anströmgeschwindigkeiten, die deren Schwebegeschwindigkeit übersteigen, ausgetragen werden. In der Praxis werden sich immer in einem gewissen Masse feine Abriebteilchen ergeben, die über eine Staubfilteranordnung 22 abgeschieden und gegebenenfalls unverzögert zurückgeführt werden können. Damit wird eine lange Zeiten weitgehend gleiche Partikelverteilung in der Wirbelschicht 2 erreicht.

Die Gas/Feststoff-Mischung der Wirbelschicht 2 verhält sich weitgehend wie eine Flüssigkeit; über eine Auslassöffnung 3 im Boden 11 der Wirbelbettapparatur 1 kann der in der Wirbelschicht 2 homogen vorliegende Gas/Feststoff-Strom 17 in die Auslaufleitung 4 "ausfliessen" und beispielsweise nach Zuführung von Gas in einem Mischungsteil 23 in den Reaktionsraum 19 eingebracht werden.

Wie einleitend festgestellt, werden die vorteilhaften Eigenschaften, insbesondere in bezug auf Stoff- und Wärmeübergang und optimale Massenverhältnisse der Reaktionsteilnehmer dazu benutzt, viele Prozesse zu vereinfachen und zu beschleunigen. Dies ist natürlich nur dann möglich, wenn Struktureigenschaften im ausfliessenden Gas/Feststoff-Strom gewahrt bleiben. Somit stellt sich, wie einleitend diskutiert, nicht nur die Aufgabe, den im ausfliessenden Gas/Feststoff-Strom vorliegenden Feststoff quantitativ zu dosieren, sondern dabei auch die Homogenität des Gas/Feststoff-Stroms zu erhalten und sogar noch zu erhöhen, d.h. damit eine qualitative Bedingung zu erfüllen.

Erfindungsgemäss geschieht dies mittels einer in Fig.1 nur symbolisch dargestellten Dosiereinrichtung 18. An diese anschliessend ist eine insbesondere ringförmig ausgebildete Düse 28 vorgesehen, die dem ausfliessenden Gas/Feststoff-Strom Gas koaxial zuführt, ihn sozusagen "ummantelt". Damit wird die mittels der Dosiereinrichtung 18 erreichte Stabilität des Gas/Feststoff-Stroms aufrechterhalten. Um möglichst jegliche Störung des Gas/Feststoff-Stroms zu vermeiden, sollte diese Gaszuführung parallel zur Strömungsrichtung geschehen, insbesondere ringförmig - obwohl auch symmetrisch angeordnete, einzelne Düsen denkbar wären - und es sollte die Geschwindigkeit des zugeführten Ummantelungsgases im wesentlichen gleich der Geschwindigkeit des Gas/Feststoff-Stroms sein.

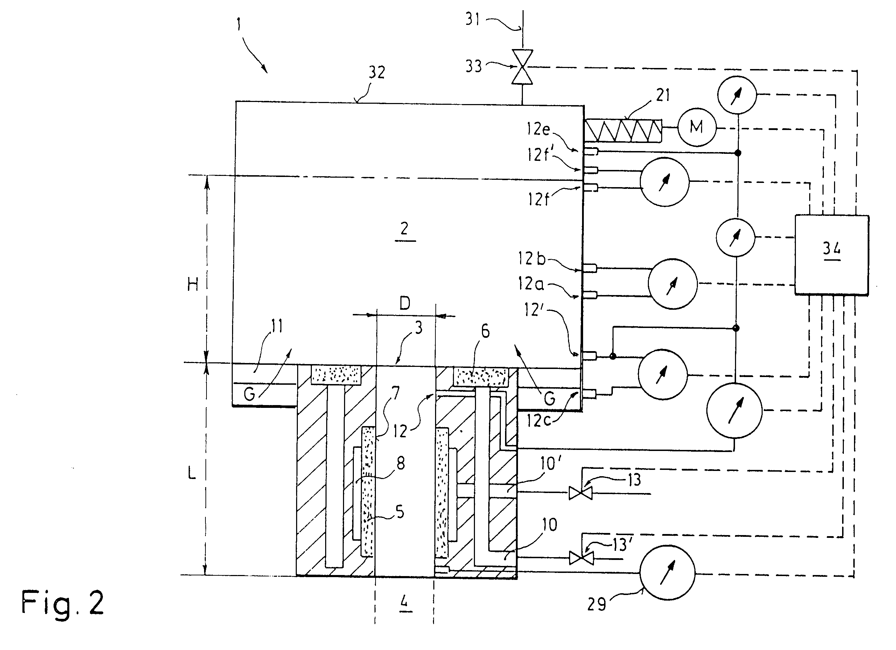

Anhand einer in der Fig.2 dargestellten Ausführungsmöglichkeit ist die Funktionsweise der Dosiereinrichtung 18 zu ersehen. Die zentral im Boden 11 der Wirbelbetteapparatur 1 angeordnete Auslassöffnung 3 mit dem Durchmesser D ist der Auslaufleitung 4 zugeordnet. Durch sie fliesst der Gas/Feststoff-Strom 17 (Fig.1) aus der Wirbelschicht 2 aus. Symmetrisch zur Auslassöffnung 3 ist eine Fluidisierungsdüse 6 angeordnet, durch die über eine pneumatische Leitung 10 zusätzlich zu dem durch den Boden 11 der Wirbelbettapparatur 1 strömenden Gas (Pfeile G) Fluidisierungsgas in die Wirbelschicht 2 eingebracht wird. Die Fluidisierungsdüse 6 ist hier in Form eines Ringkanals mit Porösem Einsatz ausgebildet, wodurch die Auslassöffnung 3 konzentrisch zusätzlich fluidisiert werden kann. Dadurch wird die Möglichkeit geschaffen, der Bildung von Instabilitäten, die gerade für die Eintrittszone kennzeichnend sind, in einem gewissen, wenn auch nicht vollständigem Masse, entgegenzuwirken. Auch hat sich gezeigt, dass auf diese Weise das Einziehen von Blasen in die Auslaufleitung 4 gehemmt wird. (Deshalb sollte die Geschwindigkeit des über die Fluidisierungsdüse 6 zusätzlich zugeführten Gases kleiner sein als die Geschwindigkeit des durch den Boden 11 der Wirbelbettapparatur 1 strömenden Gases.) Feststoffbrücken, die sich bevorzugt gerade im Bereich der Auslassöffnung 3 bilden, können so aufgebrochen und gelöst werden. Allerdings kann über solche Fluidisierungsdüsen 6 im wesentlichen nur ein Beitrag zur Homogenisierung des in die Auslaufleitung 4 ausfliessenden Gas/Feststoff-Stroms geleistet werden, eine Beeinflussung des Feststoff-Massendurchflusses ist damit nur in sehr geringem Masse möglich, da dann mit dem Einziehen von Blasen gerechnet werden müsste.

Wird jedoch, möglichst unmittelbar an die Auslassöffnung 3 anschliessend, ein Hohlkörper 5 vorgesehen, in beispielsweise der in Fig.2 dargestellten Ausführungsform, so ist eine zeitkonstante, blasenfreie Dosierung des Feststoff-Massendurchsatzes erreichbar. Dieser zylindrische Hohlkörper 5 besitzt eine poröse Wandung 7, die ihrerseits wieder von einem ringförmigen Begasungskanal 8 umgeben ist. Dieser wird über eine pneumatische Leitung 10', die mit der pneumatischen Leitung 10 zu den Fluidisierungsdüsen 6 verbunden sein kann, ebenfalls mit Fluidisierungsgas beschickt - wobei Ventile 13,13', gegebenenfalls auch Wegeventile und/oder Druckbegrenzungsventile, vorgesehen sein können. Möglichst nahe der Auslassöffnung 3 ist in der Wandung 7 des Hohlkörpers 5 eine Druckmessstelle 12 angeordnet, über die gemeinsam mit einer nahe dem Boden 11 der Wirbelbettapparatur 1 angeordneten Druckmessstelle 12' der Differenzdruck zwischen der Wirbelschicht 2 in Bodennähe und der Auslaufleitung 4 nahe der Auslassöffnung 3 bestimmt wird, wobei dazu gegebenenfalls ein piezoresistiver Differenzdruckaufnehmer oder zwei einzelne piezoresistive Druckaufnehmer vorgesehen sein können. Durch diese Positionierung der Druckmessstellen 12, 12' wird erreicht, dass die Totzeit zwischen dem Eintritt des Feststoffes in die Auslassöffnung 3, der Messung des Feststoffmassenstroms über die Druckmessstellen 12, 12' und die Beeinflussung des Feststoffmassenstroms in bezug auf Durchsatz und Homogenität minimiert wird.

Die über die Differenzdruckmessung verfügbaren Messdaten werden beispielsweise über eine speicherprogrammierbare Steuerung 34 mit eingebautem Softwareregler geführt, die wiederum die Fluidisierung und/oder Begasung des ausfliessenden Gas/Feststoff-Stroms über den Begasungskanal 8 und/oder die Fluidisierungsdüse(n) 6 steuert.

Eine Regelung des ausfliessenden Feststoffmassenstroms kann über eine Messeinrichtung 29 zur Bestimmung des Feststoffmassenstroms in einem unmittelbar an den Hohlkörper 5 anschliessenden Bereich der Auslaufleitung 4 geschehen. Diese Messdaten werden ebenfalls über die speicherprogrammierbare Steuerung 34 geführt, die wiederum die Fluidisierung und/oder Begasung des ausfliessenden Gas/Feststoff-Stroms über den Begasungskanal 8 und/oder die Fluidisierungsdüse(n) 6 regelt. Die Bestimmung des Feststoffmassenstroms kann dabei über eine Verzögerungsstrecke mit zwei Druckdifferenzmessungen oder eine andere berührungslose Messeinrichtung erfolgen.

Der zur Beeinflussung des Feststoffmassendurchsatzes notwendige Zusatz an zusätzlichem Fluidisierungsgas liegt dabei bei weniger als 0,1% des Feststoffmassendurchsatzes, wodurch äusserst schnelle Regel- und Steuerzeiten von weniger als 100 Millisekunden möglich werden.

Da, wie oben beschrieben, die Qualität der Dosierung des ausfliessenden Feststoffes sehr wesentlich auch durch die Homogenität des ausfliessenden Gas/Feststoff-Stroms bestimmt ist, sind mögliche Instabilitätsquellen bereits in der Wirbelschicht 2 durch entsprechende Massnahmen auszuschalten. So ist es beispielsweise durch günstige Ausgestaltung des Wirbelschichtbodens 11 möglich, die Instabilitätsgrenze zu erhöhen. Werden beispielsweise hochporöse Sinterböden mit einem mittleren Porendurchmesser von $25\mu$m und einer Bodendicke von ca. 20mm gewählt, so strömt das Fluid fein verteilt in die Wirbelschicht ein. Schwingungsfähige Wirbelbettböden 11, die gegebenenfalls durch einen Pulsgeber in Vibrationen versetzt werden können, unterstützen diesen Vorgang. In gleicher Weise ist auch der Einsatz von Rührern möglich. Fluidisierungsgas, das pulsierend durch den Boden 11 der Wirbelbettapparatur 1 einströmt, verbessert ebenfalls, gegebenenfalls zusätzlich zu den beschriebenen Massnahmen, die Homogenisierung der Wirbelschicht 2.

Der nicht unproblematische Bereich der Eintrittszone wird durch das Verhältnis des Durchmessers D der Auslassöffnung 3 und der Höhe H und/oder die Bodenfläche der Wirbelschicht 2 - bei gleichbleibender Fluidisierungsgeschwindigkeit - bestimmt. So erweist sich ein Verhältnis von D:H gleich 1:2 als Minimalerfordernis. Je höher die Wirbelschichthöhe H - und damit der Feststoffinhalt - gegenüber dem Durchmesser D der Auslassöffnung 3 wird, desto besser ist die Homogenität der Wirbelschicht 2, und damit die Vorhomogenisierung des ausfliessenden Gas/Feststoff-Stroms.

Grössere Wirbelschichthöhen H wirken ausserdem dämpfend für Schwankungen, die sich aufgrund der Einspeisung der Feststoffpartikel in die Wirbelschicht über beispielsweise eine Dosierschnecke 21 ergeben.

Das Verhältnis von Dosierschwankungen des über eine Dosierschnecke 21 in eine Wirbelschicht 2 eingespeisten Feststoffmassenstroms $m_{SS}$ zu Dosierschwankungen des über einen Hohlkörper 5 austretenden Feststoffmassenstroms $m_{SD}$ lässt sich durch die Beziehung darstellen:

$$\frac{\Delta m_{SS}}{\Delta m_{SD}} = \frac{2\,(H+L)\,\pi f \varrho_s\,(1-\varepsilon_{ws})\,A_{ws}}{\overline{m}_s} - 1 \qquad (1)$$

wobei H die Wirbelschichthöhe, L die Länge des Hohlkörpers 5, $\epsilon_{ws}$ die Porosität der Wirbelschicht, $A_{ws}$ die Fläche der Wirbelschicht, $\zeta_s$ die Feststoffdichte, f die Drehzahl der Dosierschnecke und $m_S$ der mittlere aus der Auslassöffnung 3 ausfliessende Feststoffmassenstrom ist. (Dissertation M. Tesch: "Zeitkonstantes Dosieren feiner Feststoffe", 1991)

Das Vorsehen weiterer Druckmessstellen 12a bis 12f ermöglicht einerseits die Kontrolle der Porosität und Homogenität der Wirbelschicht 2 über eine Druckdifferenzmessung innerhalb der Wirbelschicht 2 (12a und 12b). Andererseits kann über die Druckmessstellen 12' und 12c, die knapp oberhalb und knapp unterhalb des Bodens 11 der Wirbelbettapparatur 1 angeordnet sind, ein Druckverlust über dem Boden 11 gemessen werden, so dass mögliche Verstopfungen des porösen Bodens 11 rechtzeitig erkannt werden. Zur Kontrolle des Feststoffinhalts der Wirbelschicht 2 kann noch zusätzlich eine weitere Druckmessstelle 12e oberhalb der Wirbelschicht 2 vorgesehen sein. Vorteilhafterweise werden auch hier Differenzdruckmessungen vorgenommen.

Um zu vermeiden, dass sich feiner Feststoff aus der Wirbelschicht 2 auf den Messmembranen von Drucksensoren absetzen kann, werden vorzugsweise kleine, feine, poröse Kunststofffilter vorgesehen, bzw. wird durch Spülung der Druckleitung mit Gas ein Eindringen von Feststoffteilchen vermieden.

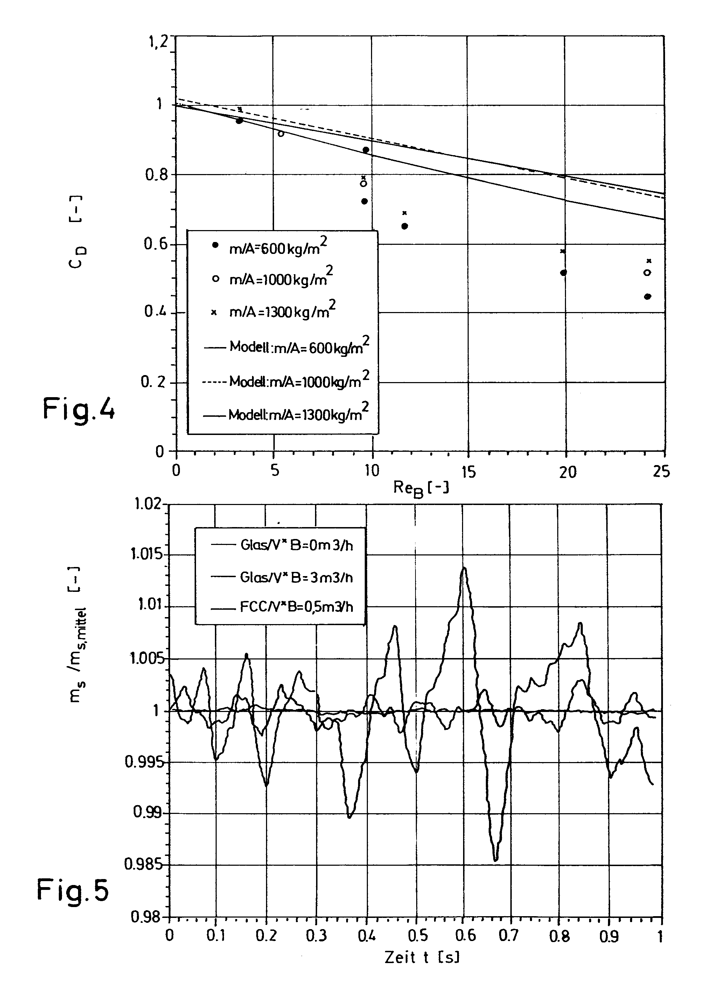

Messdaten aufgrund von Messungen der Homogenität in der Wirbelschicht 2 können sowohl über eine Nachstellung der Anströmgeschwindigkeit des Fluidisierungsgases als auch über die Zuführung zusätzlichen Fluidisierungsgases, sei es über die Fluidisierungsdüsen 6 und insbesondere über die poröse Wandung 7, beziehungsweise über Bohrungen 8a, 9b in dieser Wandung (Fig.3a und 3b) als Regulativ für die Homogenisierung der Wirbelschicht 2 einerseits bzw. des ausfliessenden Gas/Feststoff-Stroms andererseits dienen.

Bei grossen Abweichungen des Feststoffmassenstroms ist eine Korrektur durch zusätzliche Begasung allein nicht möglich. Wie oben dargestellt, kann eine Grobregelung über die Höhe H der Wirbelschicht 2 erfolgen, bzw. bei gleichbleibender Höhe H über eine Erhöhung oder Erniedrigung des Druckes oberhalb der Wir-belschicht 2. Dabei wird über einen Niveau-Fühler 12f, 12f', der über die speicherprogrammierbare Steuerung 34 die Einspeisung von Feststoff über die Dosierschnecke 21 regelt, die Höhe H der Wirbelschicht 2 konstant gehalten, während die über die beiden Druckmessstellen 12 und 12' erhaltenen Messdaten über die speicherprogrammierbare Steuerung 34 den Druck im Raum oberhalb der Wirbelschicht 2 bestimmt. Dazu ist eine in die Abdeckung 32 der Wirbelbettapparatur 1 mündende pneumatische Leitung 31 vorgesehen, deren Ventil 33 geregelt wird. Zur Kontrolle des Druckes bzw. anstelle des Niveau-Fühlers 12f, 12f' zur Regelung des über die Dosierschnecke 21 einzuspeisenden Feststoffes kann die Druckmessstelle 12e oberhalb der Wirbelschicht 2 vorgesehen werden.

Es stehen somit, um die gewünschte Dosiergenauigkeit und -schnelligkeit zu erreichen, eine Mehrzahl von Regel- bzw. Steuermechanismen zur Verfügung, deren Kombination bzw. gesonderte Anwendung einen grossen Regelbereich und ausgezeichnete Regelcharakteristika bewirken.

Regelungen bzw. Steuerungen, die über die Wirbelschicht vor sich gehen, sind naturgemäss träge und werden für die eingangs aufgeführten Anwendungsgebiete nur den Regelbereich selbst bestimmen.

Dass Grössen wie Hohlkörperdurchmesser D, Hohlkörperlänge L oder Wirbelschichtfläche $A_{WS}$ für den strömungszustand des in die Auslaufleitung 4 ausfliessenden Gas/Feststoff-Stroms bestimmend sind, ist aus den einleitend aufgeführten Untersuchungen bekannt geworden und ist auch aus Gleichung (1) zu erkennen.

In Fig.3 sind nun zwei Beispiele für Hohlkörper 5 gezeigt. Entsprechend Fig.3a hat er einen zylindrischen Innendurchmesser; die Begasung des Gas/Feststoff-Stroms findet über einen schmalen, ringförmigen Sintereinsatz 9a statt, der wiederum von einem Begasungskanal 8a umgeben ist. Eine die Druckmessstelle 12 definierende Druckmessbohrung ist nahe der Auslassöffnung 3 vorgesehen. In diesem Fall sind keine Fluidisierungsdüsen 6 (Fig.2) vorgesehen. Eine Abrisskante 27 um die Auslassöffnung 3 hemmt das Einziehen von Blasen in die Auslaufleitung 4.

Die Auslaufleitung 4 wird im allgemeinen, wie auch aus Fig.3a zu ersehen ist, einen grösseren Durchmesser besitzen als der Hohlkörper selbst. Die über die erfindungsgemässe Dosiereinrichtung 18 (Fig.1 und 2) erfolgte Stabilisierung und Homogenisierung wird auch in der Auslaufleitung 4 aufrecht erhalten bleiben, wenn der Gas/Feststoff-Strom von einem Fluid-Mantel umgeben ist, wie es durch koaxiale Begasung über die Düse (Fig.1) gerade unterhalb der Dosiereinrichtung 18 möglich ist.

Durch den leicht konvergenten Einlaufbereich des Hohlkörpers 5 der Fig.3b und durch die Anordnung von Begasungsbohrungen 9b im Übergangsbereich zum zylindrischen Innendurchmesser des Hohlkörpers 5, wobei diese Bohrungen 9b leicht gegen die Horizontale in Richtung Auslaufleitung 4 geneigt sind, wird auch bei grösseren Begasungsmengen über die Bohrungen 9b weitgehend verhindert, dass Blasen in Richtung Wirbelschicht aufsteigen und deren Homogenität beeinträchtigen. Die Druckmessstelle 12 liegt auch hier vorzugsweise nahe der Auslassöffnung 3.

Aus Fig.4 ist beispielhaft der Begasungseinfluss auf den Feststoffmassenstrom zu erkennen. Es ist in dimensionsloser Dar-stellung für einen Durchmesser von 20mm für die Auslassöffnung 3 und für Glaskugeln mit einem mittleren Partikeldurchmesser von $74\mu m$ gezeigt, um wieviel sich der Feststoffmassenstrom mit zunehmender Begasungsluft verkleinert. Ein plötzlicher Abfall des Feststoffmassenstromes bei einer Reynoldszahl von $Re_B = 9$ ist zu erkennen. Ab dieser Reynoldszahl wird der Strahl instabil. Eine homogene, stationäre Dosierung funktioniert hier nur bis zu einer Reynoldszahl von 9. Dabei ergibt sich der Ausflussquotient $c_D$ aus der theoretischen Ausflussgleichung für den Feststoffstrahl:

$$c_D = \frac{m_S}{\varsigma_P \left(1 - \varepsilon_{ws}\right) A_D \sqrt{g\left(H + L\right)}} \qquad (2)$$

wobei $m_S$ der gemessene Feststoffmassenstrom, $\varsigma_P$ die Partikeldichte, $\epsilon_{ws}$ die mittlere Wirbelschichtporösität, $A_D$ der Hohlkörperquerschnitt, g die Erdbeschleunigungskonstante, H die Wirbelschichthöhe und L die Länge des Hohlkörpers bezeichnet. (Dissertation M. Tesch "Zeitkonstantes Dosieren feiner Feststoffe", 1991)

$Re_B$, die Reynoldszahl ist über die Leerrohrluftgeschwindigkeit $u_{lb}$

$$\left(\frac{V_B}{A_D}\right)$$

des zusätzlich eingespeisten Gases in die Düse und den Partikeldurchmesser $d_p$ wie bei Wirbelschichten definiert, wobei $V_B$ der Begasungsvolumenstrom ist.

$$Re_B = \frac{V_B \cdot d_P}{A_D \cdot \gamma} \qquad (3)$$

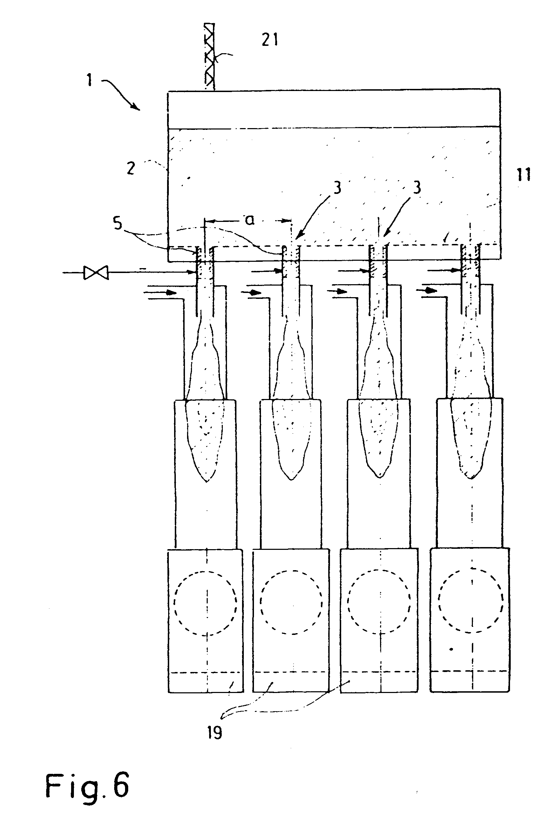

In Fig.5 sind Dosierschwankungen gezeigt, wie sie beim Austreten des Gas/Feststoff-Stroms aus einer Versuchswirbelschicht im halbtechnischen Massstab, bei Fluidisierung knapp oberhalb des Lockerungs-

EP 0 531 758 B1

punktes, bei Atmosphärendruck überhalb der Wirbelschicht, und 1 m Wirbelschichthöhe, auftreten. Im stabilen Bereich des Strahls liegen die Kurzzeitdosierschwankungen für Glaskugeln unterhalb von 0,05%, für Fluid Cracking Catalyst unterhalb 0,6%. Im Vergleich dazu die nicht brauchbaren Dosierschwankungen des instabilen Strahls für Glaskugeln. Es wurden Dosierschwankungen bis zu einer Frequenz von etwa 30 Hz mit einem Piezodifferenzdruckaufnehmer gemessen.

Fig.6 zeigt beispielhaft die Beschickung von mehreren Reaktionsräumen 19, wobei aus einer Wirbelschicht 2 über mehrere Auslauföffnungen 3 ein Gas/Flüssigkeitsstrom abgezogen wird. Jeder dieser Auslassöffnungen 3 ist jeweils ein Hohlkörper 5 zugeordnet, über den in oben dargestellter Weise der ausfliessende Gas/Feststoff-Strom zusätzlich begast werden kann.

Damit ergibt sich durch die wahlweise Auswahl von Auslassöffnungen die Möglichkeit, einen grossen Dosierbereich einzustellen und flexibel in der Handhabung zu bleiben.

Wenn in der Wirbelbettapparatur 1 mehrere Auslassöffnungen 3 zum Beschicken mehrerer Reaktionsräume 19 vorgesehen sein sollen, so ist, um Störungen infolge von Überlappungen der jeweiligen Eintrittszonen bzw. der Einfluss der Wirbelbettbegrenzungen möglichst auszuschliessen, deren Positionierung und gegenseitige Lage im Boden 11 der Wirbelbettapparatur 1 zu beachten. Bei reihenförmiger Anordnung sollte der gegenseitige Abstand a der Auslassöffnungen 3 in etwa dem Abstand der Auslassöffnungen 3 von den seitlichen Begrenzungen der Wirbelbettapparatur 1 entsprechen. Bei Wirbelbettapparaturen mit kreisförmigen Böden sollte sich die Mehrzahl der Auslassöffnungen 3 vorzugsweise in etwa im Zentrum des Bodens befinden, wobei der gegenseitige Abstand der Auslassöffnungen wenigstens gleich ihrem jeweiligen Durchmesser sein sollte. Ist jedoch eine nicht-zentrale Anordnung einer solchen Mehrzahl von Auslassöffnungen erwünscht, so sollte, wie oben dargelegt, ein ausreichender Abstand von der die Wirbelschicht 2 begrenzenden Rand der Wirbelbettapparatur gewahrt bleiben.

**Patentansprüche**

1.  Vorrichtung zum Dosieren von in einem Gas/Feststoff-Strom vorliegenden Feststoff aus einer Wirbelbettapparatur (1) mit einem Boden (11), in der Gas und Feststoff als vorhomogenisierte, fliessfähige Mischung in einer Wirbelschicht (2) vorliegen, und in der innerhalb des Bodenbereiches wenigstens eine Auslassöffnung (3) zur Entnahme des Gas/Feststoff-Stroms in eine Auslaufleitung (4 ) vorgesehen ist, dadurch gekennzeichnet, dass zur Einstellung eines zeitkonstanten, auslaufenden Massenstromes und zur Einstellung der Homogenität des auslaufenden Gas/Feststoffstromes Druckmessstellen 12 und 12' vorgesehen sind, wobei die eine Messstelle 12 möglichst nahe der Auslassöffnung (3) und die andere Messstelle 12' möglichst in der Nähe des Bodens (11) der Wirbelbettapparatur (1) angeordnet ist, dass eine Dosiervorrichtung (21) für die Zugabe der Feststoffkomponenten vorgesehen ist, dass eine Gaszufuhr (G) im Bodenbereich für das Fluidisierungsgas vorgesehen ist, und dass oberhalb der Wirbelschicht (2) eine pneumatische Leitung (31) mit einem Ventil (33) zur Regelung des Druckes oberhalb der Wirbelschicht (2) vorgesehen ist, wobei eine Steuerung (34) vorgesehen ist zur Erfassung der Drücke der Druckmessstellen (12, 12') zur Regelung der Dosiervorrichtung (21), der Gaszufuhr (G) und des Ventils (33) in der Leitung (31)

2.  Vorrichtung nach Anspruch 2, dadurch gekennzeichnet, dass im Boden (11) der Wirbelbettapparatur (1) eine Auslassdüse (6) vorgesehen ist, die insbesondere symmetrisch und im Zentrum des Bodens (11) angeordnet ist.

3.  Vorrichtung nach mindestens einem der Ansprüche 1 oder 2, dadurch gekennzeichnet, dass sich an die Auslassöffnung (3) ein Hohlkörper (5) anschliesst, der wenigstens teilweise eine gasdurchlässige Wandung (7) aufweist und wenigstens teilweise koaxial von einem Begasungskanal (8) umgeben ist.

4.  Vorrichtung nach mindestens einem der Ansprüche 1, 2 oder 3, dadurch gekennzeichnet, dass wenigstens eines der folgenden Merkmale vorgesehen ist:
    a) der Hohlkörper (5) ist im wesentlichen zylindrischer Form, wobei vorzugsweise ein - insbesondere etwa die halbe Höhe des Hohlkörpers (5) umfassender - Bereich einen gegen die Auslassöffnung (3) der Wirbelbettapparatur (1) divergierenden Innendurchmesser aufweist;
    b) die Wandung (7) des Hohlkörpers (5) ist mit - gegebenenfalls schrägen, insbesondere in einem Winkel von ca. 15° gegen die Horizontale abwärts gerichteten - Bohrungen (9) versehen oder porös und besteht insbesondere aus Sintermaterial, wobei gegebenenfalls die - vorzugsweise gegen die Horizontale abwärts gerichtete(n) - Bohrung(en) (9) im zylindrischen Bereich des Hohlkörpers (5) vorgesehen ist (sind), insbesondere im Übergangsbereich zwischen zylindrischem und konvergieren-

10

dem Bereich;

c) die Summe der Querschnittsflächen aller Hohlkörper (5) an der (den) Auslassöffnung(en) (3) der Wirbelbettapparatur (1) beträgt maximal 5 Prozent - vorzugsweise etwa 0.2 - 2 Prozent - der Bodenfläche der Wirbelbettapparatur (1) beträgt;

d) der Durchmesser (D) des Hohlkörpers (5), im Bereich der Auslassöffnung (3), beträgt höchstens die Hälfte, vorzugsweise höchstens ein Drittel, insbesondere ein Zehntel bis ein Fünfzigstel der Höhe (H) der Wirbelschicht (2).

5. Vorrichtung nach mindestens einem der vorherigen Ansprüche, dadurch gekennzeichnet, dass wenigstens eines der folgenden Merkmale vorgesehen ist

a) wenigstens eine, insbesondere ringförmige, - gegebenenfalls wenigstens zwei symmetrisch in bezug auf die Auslassöffnung (3) liegende - Fluidisierungsdüse(n) (6) mündet bzw. münden unmittelbar an der Auslassöffnung (3) in die Wirbelbettapparatur (1), wobei bevorzugt der Begasungskanal (8) und die Fluidisierungsdüse(n) (6) über ein und dieselbe pneumatische Leitung (10) beaufschlagbar sind;

b) die Wirbelbettapparatur (1) weist einen porösen - insbesondere in Schwingungen versetzbaren - Boden (11) auf;

c) es ist eine Pulsiervorrichtung für das durch einen Boden (11) in die Wirbelbettapparatur (1) einströmende Gas vorgesehen.

6. Vorrichtung nach einem der vorhergehenden Ansprüche, dadurch gekennzeichnet, dass wenigstens eines der folgenden Merkmale vorgesehen ist:

a) Wirbelbettapparatur (1) und Auslassdüse(n) (5;6) sind - vorzugsweise wenigstens bis 25 bar, insbesondere aber bis 80 bar - druckfest und/oder temperaturfest - insbesondere für Temperaturbereiche bis 800°C, gegebenenfalls bis über 1200°C -, zweckmässig aus keramischem Material, ausgeführt;

b) wenigstens eine weitere Druckmessstelle (12a, 12b, 12c, 12d, 12e) ist zur Bestimmung bzw. Überprüfung des Druckes oberhalb der Wirbelschicht (2) und/oder der Porosität der Wirbelschicht (2) und/oder der Höhe (H) der Wirbelschicht (2) und/oder der Durchlässigkeit eines Bodens (11) der Wirbelbettapparatur (1) vorgesehen;

c) eine in den Raum oberhalb der Wirbelschicht (2) mündende, mit einem Einlass-Druckventil (33) versehene Druckleitung (31) und/oder eine in die Wirbelbettapparatur (1) mündende Feststoff-Einspeisleitung, letztere insbesondere in Form einer Dosierschnecke (21), sind vorgesehen, von denen wenigstens eine Leitung - vorzugsweise über die über die Messeinrichtung (29) und/oder eine der Messstellen (12, 12', 12a, 12b, 12c, 12d, 12e) erhaltbaren Messdaten - regel- bzw. steuerbar ist;

d) unterhalb des Hohlkörpers (5) ist wenigstens eine, insbesondere ringförmige, Düse (28) - vorzugsweise mit parallel zu dem ausfliessenden Gas/Feststoff-Strom abwärts gerichteter Ausströmöffnung - zum Zuführen von Ummantelungsgas vorgesehen.

e) In der Auslaufleitung (4) ist (sind) wenigstens eine Messeinrichtung (29) und/oder wenigstens eine Druckmessstelle (12) - vorzugsweise im Bereich der Auslassöffnung (3) - und vorzugsweise wenigstens eine weitere Druckmessstelle (12') - insbesondere knapp oberhalb eines Bodens (11) der Wirbelbettapparatur (1) - zur Bestimmung des Feststoffmassendurchsatzes vorgesehen, und die Druckmessstelle (12) vorzugsweise - in bezug auf den ausfliessenden Gas/Feststoff-Strom - die Druckmessstelle (12) vor der (den) Bohrung(en) (9) liegt, wobei zweckmässig der Abstand der Druckmessstelle (12) vom Boden (11) der Wirbelbettapparatur (1) einem Zehntel des Durchmessers (D) der Auslassöffnung (3) und der Abstand der Bohrung(en) (9) vom Boden der Wirbelbettapparatur (1) einem Viertel des Durchmessers (D) der Auslassöffnung (3) entspricht.

7. Vorrichtung nach einem der vorangehenden Ansprüche, dadurch gekennzeichnet, dass wenigstens eine zu dem Begasungskanal (8) und/oder der wenigstens einen Fluidisierungsdüse (9) führende Druckleitung (10,10') vorgesehen ist, in der wenigstens ein - vorzugsweise über die über die Messeinrichtung (29) und/oder eine der Messstellen (12, 12', 12a, 12b, 12c, 12d, 12e) erhaltbaren Messdaten - regel- bzw. steuerbares Ventil (13) angeordnet ist.

8. Verfahren zum Dosieren von in einem Gas/Feststoff-Strom vorliegenden Feststoff in der Auslaufleitung einer Wirbelbettapparatur mit bodenseitigem Auslaß, dadurch gekennzeichnet, dass der Feststoffmassendurchsatz in der Auslaufleitung (4) gemessen wird und als Istwert zum Vergleich mit einem Sollwert dient, wobei der Feststoffmassendurchsatz mittels Messung des Differenzdruckes zwischen dem Boden (11) der Wirbelbettapparatur (1) und Auslaufleitung (4) - vorzugsweise nahe der Auslassöffnung (3) und/oder knapp nach der Begasungsstelle - bestimmt wird, und dass die Menge der in die Wirbelbettapparatur (1) eingespeisten Feststoffpartikel und/oder der Druck oberhalb der Wirbelschicht (2) in Abhängigkeit vom gemessenen Feststoffmassendurchsatz und/oder in Abhängigkeit von der Höhe (H) der Wirbelschicht (2) gesteuert bzw. geregelt wird.

9. Verfahren nach Anspruch 8, dadurch gekennzeichnet, dass wenigstens einer der folgenden Verfahrensschritt durchgeführt wird:

a) die Höhe (H) der Wirbelschicht (2) ist wenigstens doppelt so gross, vorzugsweise dreimal so gross, aber insbesondere zehn- bis fünfzigmal so gross, wie der Durchmesser (D) der wenigstens einen Auslassöffnung (3);

b) das durch den - vorzugsweise porösen - Boden (11) der Wirbelbettapparatur (1) strömende Gas und/oder der Boden (11) wird in Schwingungen versetzt, deren Frequenz und/oder Amplitude vorzugsweise einstellbar sind;

c) die in die Wirbelbettapparatur (1) einströmende Gasmenge wird so gesteuert, dass bei niedrig expandierter Wirbelschicht (2) - vorzugsweise in der Nähe des Lockerungspunktes - gearbeitet wird, insbesondere im Bereich des 0.95-bis 2-fachen der Lockerungsgeschwindigkeit;

d) über eine - vorzugsweise ein und dieselbe - pneumatische Leitung (10) wird der Gas/Feststoff-Strom in der Auslaufleitung (4) und/oder unmittelbar an der Auslassöffnung (3) begast bzw. fluidisiert;

e) dem ausfliessenden Gas/Feststoff-Strom wird knapp unterhalb der Begasungsstelle Ummantelungsgas zur Stabilisierung - vorzugsweise koaxial, in Richtung des ausfliessenden Gas/Feststoffstroms - über wenigstens eine, insbesondere ringförmige, Düse (28) zugeführt.

## Claims

1. A device for apportioning a solid contained in a gas/solid flow from a fluid-bed device (1) comprising a bottom (11) in which are present gases and solids as a pre-homogenised fluid mixture in a fluid layer (2), with at least one discharge opening (3) provided within the bottom area for removal of the gas/solid flow into a discharge duct (4), **characterized in that** pressure measuring points 12 and 12' are provided for setting a time-constant discharging mass flow and for setting the homogeneity of the discharging gas/solid flow, and that the one measuring point 12 is as close as possible to the discharge opening (3) and the other measuring points 12' is as close as possible to the bottom (11) of the fluid-bed device (1), that an apportioning device (21) for adding the solid components is provided, that a gas feed (G) is provided in the bottom area for the fluidizing gas, and that above the fluid layer (2) is provided a pneumatic pipe (31) with a valve (33) for controlling the pressure above the fluid layer (2), and that a control (34) is provided for detecting the pressures of the pressure-measuring points (12,12') for the purpose of regulating the apportioning device (21), the gas feed (G) and the valve (33) in the pipe (31).

2. A device according to claim 2, **characterized in that** a discharge nozzle (6) is provided in the bottom (11) of the fluid-bed device (1) which is arranged in particular symmetrically and in the centre of the bottom (11).

3. A device according to at least one of claims 1 or 2, **characterized in that** adjacent to the discharge opening (3) is a hollow element (5) which at least partially comprises a gas-permeable wall (7) and at least partially coaxially surrounded by a gas channel (8).

4. A device according to at least one of claims 1, 2 or 3, **characterized in that** at least one of the following features is provided:

a) the hollow element (5) is essentially of cylindrical shape, with one area, in particular one which encompasses approximately half the height of the hollow element (5), having an inside diameter which diverges towards the discharge opening (3) of the fluid-bed device (1);

b) the wall (7) of the hollow element (5) is provided with bores (9), if appropriate at a slant, in particular oriented downwards at an angle of approximately 15° relative to the horizontal, or it is porous and composed in particular of sintered material, and that, if appropriate, the bore(s) (9), which is/are preferably oriented downwards relative to the horizontal, is/are provided in the cylindrical area of the hollow element (5), in particular in the transitional area between cylindrical and converging areas;

c) the sum of the cross-sectional surfaces of all hollow elements (5) on the discharge opening(s) (3) of the fluid-bed device (1) is maximum 5 percent, preferably between approximately 0.2 and 2 percent, of the bottom surface of the fluid-bed device (1);

d) the diameter (D) of the hollow element (5) in the area of the discharge opening (3) is maximum one half, preferably maximum one third, in particular between one tenth and one fiftieth, of the height (H) of the fluid layer (2).

5. A device according to at least one of the above claims, **characterized in that** at least one of the following features is provided:

a) at least one fluidizing nozzle (6), in particular an annular one, if appropriate at least two placed symmetrically relative to the discharge opening (3), terminate(s) directly at the discharge Opening (3) into the fluid-bed device (1), and the gas channel (8) and the fluidizing nozzle(s) (6) are loaded via one and the same pneumatic pipe (10);

b) the fluid-bed device (1) comprises a porous, in particular an oscillatable, bottom (11);

c) a pulsating device for gas entering through a bottom (11) into the fluid-bed device (1) is provided.

6. A device according to one of the above claims, **characterized in that** at least one of the following features is provided:

a) the fluid-bed device (1) and the discharge nozzle(s) (5; 6) are pressure-proof, preferably up to at least 25 bar, in particular up to 80 bar, and/or temperature-proof, in particular for temperature ranges up to 800°C, if appropriate up to and above 1,200°C, and for practical reasons made of a ceramic material;

b) at least one further pressure-measuring point (12a, 12b, 12c, 12d, 12e) is provided for determining or checking the pressure above the fluid layer (2) and/or the porosity of the fluid layer (2) and/or the height (H) of the fluid layer (2) and/or the permeability of a bottom (11) of the fluid-bed device (1);

c) a pressure pipe (31), which terminates in the area above the fluid layer (2) and which is provided with an inlet pressure valve (33), and/or a solid feed pipe, which terminates in the fluid-bed device (1), the latter in particular in the form of an apportioning screw (21), are provided, of which at least one duct can be regulated or controlled, preferably by means of measuring data available via the measuring device (29) and/or one of the measuring points (12, 12', 12a, 12b, 12c, 12d, 12e);

d) below the hollow element (5) is provided at least one nozzle (28), in particular an annular one, preferably with a discharge opening which is oriented downwards and parallel to the discharging gas/solid flow, for delivering an enveloping gas.

e) in the discharge pipe (4) is/are provided at least one measuring device (29) and/or at least one pressure measuring point (12), preferably in the area of the discharge opening (3), and preferably at least one further pressure measuring point (12'), in particular just above a bottom (11) of the fluid-bed device (1) for the purpose of determining the solid mass throughput, and the measuring point (12) preferably lies, relative to the discharged gas/solid flow, in front of the bore(s) (9), and the distance of the pressure-measuring point (12) from the bottom (11) of the fluid-bed device (1) equals one tenth of the diameter (D) of the discharge opening (3), and the distance of the bore(s) (9) from the bottom of the fluid-bed device (1) equals one fourths of the diameter (D) of the discharge opening (3).

7. A device according to one of the above claims, **characterized in that** at least one pressure pipe (10, 10') is provided, which connects to the gas channel (8) and/or comprises at least one fluidizing nozzle (9) and wherein is fitted at least one control valve (13) which is preferably regulated or controlled via measuring data obtained via the measuring device (29) and/or one of the measuring points (12, 12', 12a, 12b, 12c, 12d, 12e).

8. A process for apportioning a solid, which is contained in a gas/solid flow, in the discharge pipe of a fluid-bed device with bottom discharge, **characterized in that** the solid mass throughput in the discharge pipe (4) is measured and serves as an actual value for comparison with a nominal value, and that the solid mass throughput is determined by way of measuring the pressure difference between the bottom (11) of the fluid-bed device (1) and the discharge pipe (4), preferably near the discharge opening (3) and/or just after the gas point, and that the volume of solid particles fed into the fluid-bed device (1) and/or the pressure above the fluid layer (2) is controlled or regulated in dependence on the measured solid mass throughput and/or in dependence on the height (H) of the fluid layer (2).

9. A process according to claim 8, **characterized in that** at least one of the following procedural stages is carried out:

a) the height (H) of the fluid layer (2) is at least twice as high, preferably three times as high, but in particular between ten and fifteen times as high, as the diameter (D) of the at least one discharge opening (3);

b) the gas which flows through the bottom of the fluid-bed device (1), said bottom preferably being porous, and/or the bottom (11) are made to oscillate at a preferably adjustable frequency and/or amplitude;

c) the volume of gas flowing into the fluid-bed device (1) is controlled in such a manner that work is performed with a low expanded fluid layer (2), preferably near the fluidizing point, in particular in the range between 0.95 to 2 times the fluidizing speed;

d) the gas/solid flow is gassed or fluidized in the discharge pipe (4) and/or directly at the discharge opening (3) via, preferably one and the same, pipe (10);

e) just below the gassing point, the discharging gas/solid flow is fed enveloping gas for the purpose of stabilization, preferably coaxially, in the direction of the discharging gas/solid flow, via at least one nozzle (28), in particular an annular one.

## Revendications

1. Dispositif pour doser la matière solide existant dans un courant de gaz et de matières solides et sortant d'un appareil à lit fluidisé (1) avec un fond (11), dans lequel le gaz et la matière solide sont présents sous forme de mélange fluide et homogénéisé au préalable dans une couche fluidisée (2) et dans lequel, dans la région du fond, il est prévu au moins un orifice de sortie (3) pour prélever le courant de gaz et de matières solides vers une conduite de sortie (4), caractérisé en ce que, pour régler le débit massique sortant de manière constante en fonction du temps, et pour régler l'homogénéité du courant de gaz et de matières solides sortant, il est prévu des points de mesure de pression (12, 12' ), dans lesquels l'un des points de mesure (12) est situé le plus près possible de l'orifice de sortie (3) et l'autre point de mesure (12' ) est situé le plus près possible du fond (11) de l'appareil à lit fluidisé (1), en ce qu'il est prévu un dispositif de dosage (21) pour l'adduction de composants solides, en ce qu'il est prévu une adduction de gaz (G) dans la région du fond pour le gaz de fluidisation et en ce qu'il est prévu, au-dessus de la couche fluidisée (2), une conduite pneumatique (31) avec une vanne (33) pour le réglage de la pression au-dessus de la couche fluidisée (2), une commande (34) étant prévue pour recevoir les pressions provenant des points de mesure de pression (12, 12') en vue de la régulation du dispositif de dosage (21), de l'adduction de gaz (G) et de la vanne (33) dans la conduite (31).

2. Dispositif selon la revendication 2, caractérisé en ce qu'il est prévu, dans le fond (11) de l'appareil à lit fluidisé (1), une tuyère de sortie (6) qui présente en particulier une disposition symétrique et est située au centre du fond ( 11).

3. Dispositif selon au moins l'une des revendications 1 ou 2, caractérisé en ce qu'un corps creux (5) se raccorde à l'orifice de sortie (3), présente, au moins partiellement, une paroi (7) perméable aux gaz et est entouré au moins partiellement de manière coaxiale par un canal d'adduction de gaz (8).

4. Dispositif selon au moins l'une des revendications 1, 2 ou 3, caractérisé en ce qu'il est prévu au moins l'une des caractéristiques suivantes.

a) Le corps creux (5) est de forme essentiellement cylindrique et, de préférence, une partie comprenant en particulier environ la moitié de la hauteur du corps creux (5) présente un diamètre intérieur divergent contre l'orifice de sortie (3) de l'appareil à lit fluidisé (1);

b) La paroi (7) du corps creux (5) est pourvue de trous (9) éventuellement obliques, en particulier orientés vers le bas, avec un angle d'environ 15° par rapport à l'horizontale ou est poreux et est constitué en particulier de matériaux frittés, tandis qu'éventuellement le ou les trous orientés de préférence vers le bas par rapport à l'horizontale est (ou sont) prévus dans la partie cylindrique du corps creux (5) et en particulier dans la partie de transition entre la partie cylindrique et la partie convergente;

c) La somme des surfaces de section de tous les corps creux (5) à l'orifice ou aux orifices de sortie (3) de l'appareil à lit fluidisé (1) constitue au maximum 5% et, de préférence, environ 0,2 à 2% de la

14

surface du fond de l'appareil à lit fluidisé (1).

d) Le diamètre (D) du corps creux (5) dans la région de l'orifice de sortie (3) atteint au maximum la moitié et de préférence au moins 1/3 et en particulier de 1/10 à 1/50 de la hauteur (H) de la couche fluidisée (2).

5. Dispositif selon au moins l'une des revendications précédentes, caractérisé en ce qu'il est prévu au moins l'une des caractéristiques suivantes:

a) Au moins une tuyère de fluidisation (6), en particulier annulaire, éventuellement au moins deux tuyères de fluidisation situées symétriquement par rapport à l'orifice de sortie (3) débouche(nt) immédiatement à l'orifice de sortie (3) dans l'appareil à lit fluidisé (1) alors que le canal d'adduction de gaz (8) et la ou les tuyères de fluidisation (6) peuvent être alimentées par une même conduite pneumatique (10).

b) L'appareil à lit fluidisé (1) présente un fond (11) poreux et, en particulier, pouvant être mis en vibration.

c) Il est prévu un dispositif de pulsation pour le gaz pénétrant à travers un fond ( 11) dans l'appareil à lit fluidisé (1).

6. Dispositif selon l'une des revendications précédentes, caractérisé en ce qu'il est prévu au moins l'une des caractéristiques suivantes :

a) L'appareil à lit fluidisé (1) et les tuyères de sortie (5, 6) sont réalisés de manière à résister à la pression et, de préférence, a au moins jusque 25 bar et, en particulier, jusqu'à 80 bar et/ou résistent à la température, en particulier pour les intervalles de température jusqu'à 800 °C et éventuellement jusqu'à plus de 1200 °C et sont réalisés avantageusement en matériaux céramiques.

b) Il est prévu au moins un autre point de mesure de pression (12a, 12b, 12c, 12d, 12e) pour déterminer ou vérifier la pression au-dessus de la couche fluidisée (2) et/ou la porosité de la couche fluidisée (2) et/ou la hauteur (H) de la couche fluidisée (2) et/ou la perméabilité d'un fond (11) de l'appareil à lit fluidisé (1);

c) Il est prévu une conduite à pression (31) pourvue d'une vanne à pression d'entrée (33) et débouchant dans l'espace au-dessus de la couche fluidisée (2) et/ou une conduite d'alimentation de matières solides débouchant dans l'appareil à lit fluidisé (1), cette dernière en particulier sous la forme d'une vis doseuse (21 ) dont au moins une conduite est réglable ou commandable de préférence au moyen des données de mesure pouvant être obtenues avec le dispositif de mesure (29) et/ou l'un des points de mesure ( 12, 12' , 12a, 12b, 12c, 12d, 12e).

d) Il est prévu, en dessous du corps creux (5), au moins une tuyère (28) en particulier annulaire, de préférence avec un orifice de sortie orienté vers l'aval et parallèlement au courant de gaz et de matières solides sortant, pour assurer l'adduction du gaz enveloppant.

e) Il est prévu, dans la conduite de sortie (4), au moins un dispositif de mesure (29) et/ou au moins un point de mesure de pression (12), de préférence dans la région de l'orifice de sortie (3) et, de préférence, au moins un autre point de mesure (12') en particulier juste au-dessus d'un fond (11) de l'appareil à lit fluidisé (1) pour déterminer le débit massique de matières solides et le point de mesure de pression (12), de préférence par rapport au courant sortant de gaz et matières solides, le point de mesure de pression (12) est situé avant le ou les trous (9) alors que, avantageusement, la distance du point de mesure de pression (12) par rapport au fond (11) de l'appareil à lit fluidisé (1) correspond à un dixième du diamètre (D) de l'orifice de sortie (3) et la distance du ou des trous (9) par rapport au fond de l'appareil à lit fluidisé (1) correspond à un quart du diamètre (D) de l'orifice de sortie (3).

7. Dispositif selon l'une des revendications précédentes, caractérisé en ce qu'il est prévu au moins une conduite à pression (10, 10') menant au canal d'adduction de gaz (8) et/ou au moins à une tuyère de fluidisation (9) dans laquelle est disposée au moins une vanne (13) réglable ou commandable de préférence au moyen des données de mesure pouvant être obtenues par le dispositif de mesure (29) et/ou l'un des points de mesure ( 12, 12' , 12a, 12b, 12c, 12d, 12e).

8. Procédé de dosage de la matière solide existant dans un courant de gaz et de matières solides dans la conduite de sortie d'un appareil à lit fluidisé, avec sortie du côté du fond, caractérisé en ce que le débit massique de matières solides dans la conduite de sortie (4) est mesuré et sert de valeur réelle à comparer à une valeur de consigne, alors que le débit massique de matières solides est déterminé par mesure de la pression différentielle entre le fond (11) de l'appareil à lit fluidisé (1) et la conduite de sortie (4), de préférence près de l'orifice de sortie (3) et/ou immédiatement après le point d'adduction de gaz et en ce que la quantité de particules de matières solides introduites dans l'appareil à lit fluidisé (1) et/ou la pression au-dessus de la couche fluidisée (2) est commandée ou réglée en fonction du débit massique de matières solides mesuré et/ou en fonction de la hauteur (H) de la couche fluidisée (2).

9. Procédé selon la revendication 8, caractérisé en ce qu'au moins l'une des opérations suivantes est réalisée :

a) La hauteur (H) de la couche fluidisée (2) est au moins deux fois plus grande et, de préférence, trois fois plus grande mais, en particulier, de 10 à 50 fois plus grande que le diamètre (D) d'au moins un orifice de sortie (3);

b) Le gaz passant à travers le fond (11), de préférence poreux, de l'appareil à lit fluidisé (1) et/ou le fond (11) est mis en vibration, dont la fréquence et/ou l'amplitude sont réglables de préférence;

c) La quantité de gaz pénétrant dans l'appareil à lit fluidisé (1) est commandé de façon à ce qu'en cas de couche fluidisée (2) à faible expansion, on opère de préférence à proximité du point de détassage et, en particulier, dans la zone allant de 0,95 à 2 fois la vitesse de détassage;

d) Par une conduite pneumatique (10) qui est de préférence la même, le courant de gaz et de matières solides est alimenté en gaz ou fluidisé dans la conduite de sortie (4) et/ou immédiatement à l'orifice de sortie (3);

e) Le courant sortant de gaz et de matières solides reçoit immédiatement en dessous du point d'adduction de gaz, un gaz d'enveloppement pour la stabilisation, de préférence dans le sens coaxial en direction du courant de gaz et de matières solides sortant, en passant par au moins une tuyère (28), en particulier de forme annulaire.

Fig.3a

Fig.3b

Fig.1

Fig. 2

Fig.4

Fig.5

19

Fig.6